# EUROPEAN PATENT APPLICATION

(11) **EP 0 666 486 A1**
(43) Date of publication of application: **09.08.1995**
(21) Application number: 95400251.5
(22) Date of filing: 07.02.1995
(51) Int. Cl.: G02B 6/38

(54) **Terminal treatment process for a plastic fibre and a device for the treatment thereof**

(30) Priority: 07.02.1994 JP 13428/94
(71) Applicant: SUMITOMO WIRING SYSTEMS, LTD., Yokkaichi City Mie 510 (JP)
(72) Inventor: Kawamura, Shigeto, c/o SUMITOMO WIRING SYSTEMS LTD, Yokkaichi-city, Mie 510 (JP); Yuuki, Hayato, c/o SUMITOMO WIRING SYSTEMS LTD, Yokkaichi-city, Mie 510 (JP)
(74) Representative: Hasenrader, Hubert

(57) **Abstract**

In terminal treatment of a plastic fibre fitted into a ferrule, its process and device are improved so as to prevent a void formation between the ferrule and the plastic fibre, whereby avoiding crack formation.

After a plastic fibre 10 is cut, a coating thereof 12 is stripped at a predetermined length from its tip, so as to expose a core-and-cladding part 11. The exposed core-and-cladding part is inserted into a ferrule 20, such that the part 11 protrudes from a tip of the ferrule 20 at a predetermined length. Then, the tip of the ferrule 20, from which the core-and-cladding part protrudes, is pressed into a blind hole mounted on a heat treatment device 30. In this way the plastic fibre 10 is heated not only in the vicinity of the end face but also by sidewall of the ferrule 20. Accordingly, the end portion of the cladded core fuses uniformly to form a melt zone 23 and to fill this zone completely without producing a void. At the same time the base of the blind hole which is finished in a mirror-face fashion is imprinted on the end face of the plastic fibre 10.

## Description

The present invention relates to a process and apparatus for effecting a thermal treatment on a plastic fibre, such as an optical fibre, composed of a cladded core covered with a coating, whereby an end portion of the fibre is held fast within a ferrule.

Plastic fibres such as optical fibres nowadays find applications in a wide variety of technical fields, covering transport vehicles from cars to aircraft, meteorological observation, industrial and scientific instrumentation, lighting, etc.

In these applications, it is often necessary to terminate a length of plastic fibre in a ferrule. Various methods are known in the prior art for ensuring that the end of the fibre is held fast within the ferrule.

In one example disclosed in JP-A-S58 187 903, once the plastic fibre is fitted into its ferrule, it is submitted to a cold and hot thermal shock e.g. by being exposed for 30 minutes at -40°C and 30 minutes at 85°C. However, it has been found that this practice causes the plastic fibre to shrink, whereupon the end portion of the fibre tends to become disengaged from its ferrule. The cause of this fibre shrinkage is not yet properly understood. It is nevertheless widely held that it originates from the heating and drawing of the core and cladding during manufacture, which creates a strain between the core and the cladding. Under these conditions, the further addition of heat is thought to give rise to the aforementioned shrinkage.

Another probable cause for this shrinkage resides in the difference in thermal expansion coefficients between the ferrule, coating and cladded core.

In the prior art, the disengagement of the plastic fibre is prevented by fixing the fibre to its ferrule by an adhesive, or by effecting a thermal treatment on the terminal portion of the fibre, such as the so-called "hot plate treatment", or the like.

An example of such a known thermal treatment is illustrated in Figs. 6 to 8. A plastic fibre 51 is passed through a ferrule 52. The inner surface at the tip of the ferrule is tapered to form a tapered melt zone 52a (Fig. 6). The tip of the fibre is applied against a hot plate 53 having a smooth face (Fig. 7). The heat from the plate 53 causes the tip of the plastic fibre to fuse and flow into the melt zone. In this way, the end of the plastic fibre is prevented from falling off by forming a taper, and its end section is rendered smooth (Fig. 8).

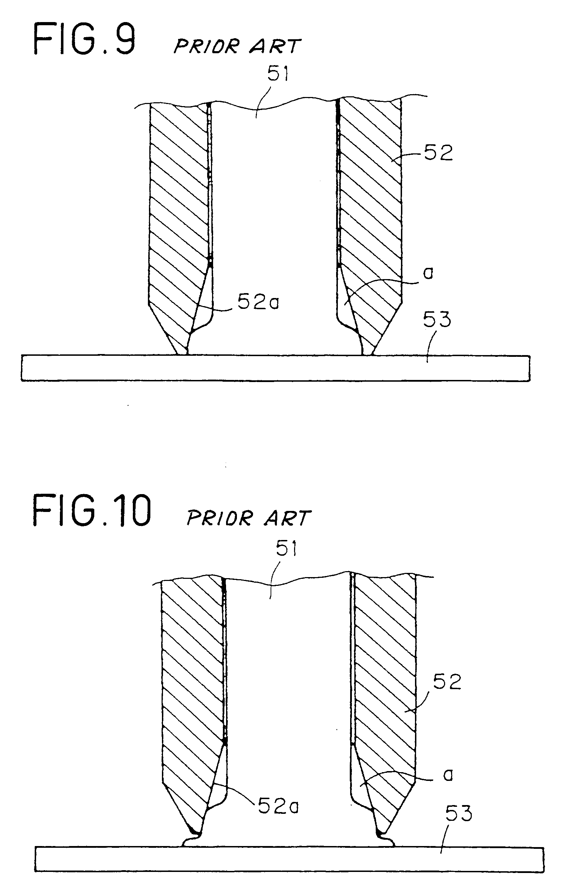

In the above terminal treatment process, it becomes difficult to completely fill all the melt zone 52a with the plastic fibre material when the former becomes large. Consequently, there can exist a void a in the melt zone 52a, especially at the interface between the ferrule 52 and the fused plastic fibre 51, as shown in Fig. 9. To prevent this phenomenon, it could be envisaged to increase the temperature of the hot plate 53. However, there would then occur a tendency for the melted end portion of the plastic fibre 51 to spread out from the end of the ferrule due to the resultant decrease in the viscosity of the plastic material.

Therefore, voids a are still found to exist between the tapered melt zone 52a and the plastic fibre 51.

When cold and hot thermal shock testing is carried out on the plastic fibre 51 with such voids, stress becomes concentrated at the interface between the melt zone of the plastic fibre 51 and the zone outside, thus giving rise to a crack.

In view of this problem, an object of the present invention is to improve the thermal treatment of a plastic fibre terminal and to provide a device for that treatment so as to prevent the formation of a void between the melted plastic fibre and the ferrule, and consequently to prevent the formation of the aforementioned crack.

To this purpose, the present invention provides a terminal treatment process of a plastic fibre comprised at least of a core-and-cladding part and a coating, the process comprising the steps of :
- exposing an end portion of the core-and-cladding part over a predetermined length by stripping the coating ;
- passing the plastic fibre terminal through a ferrule, so that an end face of the core-and-cladding part protrudes therefrom at a predetermined length, the ferrule being so configured as to hold the coating and the core-and-cladding part ;
- applying said end face to a heating means, so that the end portion fuses to form a melt zone and to be rendered non-retractable from the ferrule,

characterized in that when the end face of the core-and-cladding part is applied to the heating means, the sidewall of the ferrule end portion is simultaneously heated by the heating means.

The ferrule is made of a heat-conductive material, such as a metal.

The sidewall of the ferrule end portion may be heated by inserting it into a blind hole provided in a heating means, the end face of the protruding core-and-cladding part being applied to a base of the blind hole.

The base of the blind hole is preferably finished in a mirror-face fashion.

For retaining the plastic fibre in the ferrule, the end portion of the ferrule may be provided with an internal recess whereby the melt zone of the core-and-cladding part is tied to the ferrule.

The internal recess of the ferrule preferably comprises an internal tapered end portion thereof.

Another object of the present invention is to provide a device for treating such a plastic fibre terminal after being passed through a ferrule as defined above, the device comprising a heating means and a means for heating the heating means, characterized in that the heating means is provided with a blind hole having a base and a sidewall, the blind hole being suitable for receiving the plastic fibre terminal such that the end face of the core-and-cladding part is applied to the base of the blind hole and such that the sidewall of the ferrule comes into contact with the sidewall of the blind hole.

The heating means may be made of a metal.

The base of the blind hole is preferably finished in a mirror-face fashion.

The heating means may comprise a first plate provided with a through hole and a second plate applied against the first plate, whereby the through hole is transformed into the blind hole.

The means for heating may comprise a chamber closed by the heating means and a heater disposed within the chamber.

In such a process and device as described above, the plastic fibre tip is passed through the ferrule and abutted against a face of the heating plate and, at the same time, the sidewall of the end portion of the ferrule is heated, so that the plastic fibre is heated not only in the vicinity of the tip, but also in the melt zone of the ferrule in a global and uniform way and so that the lateral part of the plastic fibre is rendered easier to melt. As a result, the formation of a void between the melted plastic fibre and the ferrule is effectively prevented.

The plastic fibre thus treated is especially adapted for use in environments where temperature variations are high.

The above and other objects, features and advantages of the invention will be apparent from the following description of the preferred embodiments, given as a non-limiting example, with reference to the accompanying drawings, in which :

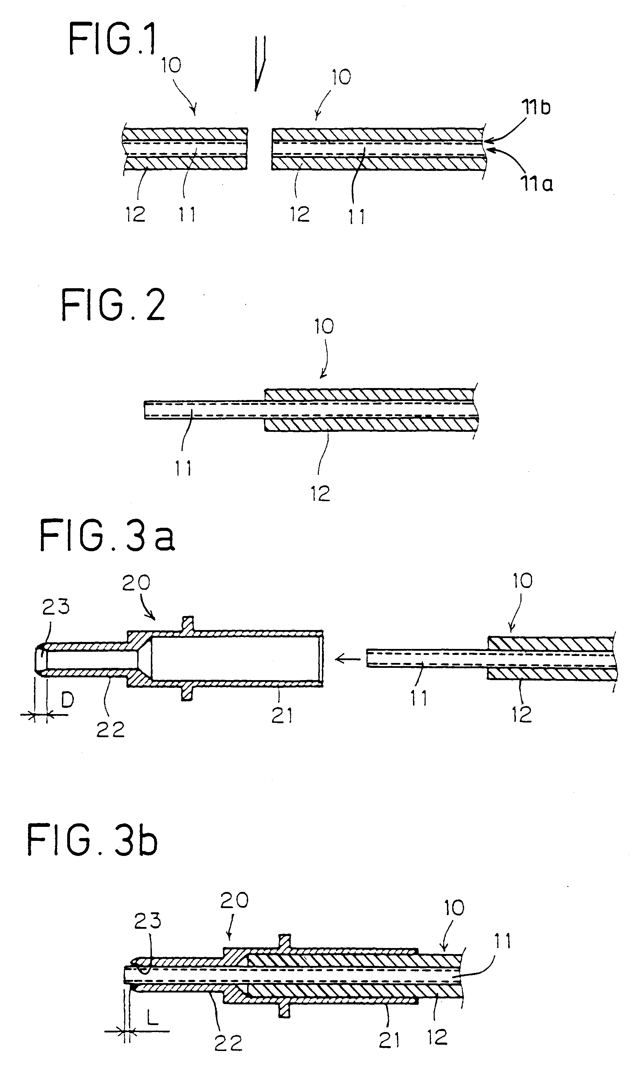

Fig. 1 shows a first step in a terminal treatment preparation process according to the invention ;
Fig. 2 shows a second step of the aforementioned process ;
Fig. 3a shows a third step of the aforementioned process ;
Fig. 3b shows the result after the third step of the aforementioned process ;

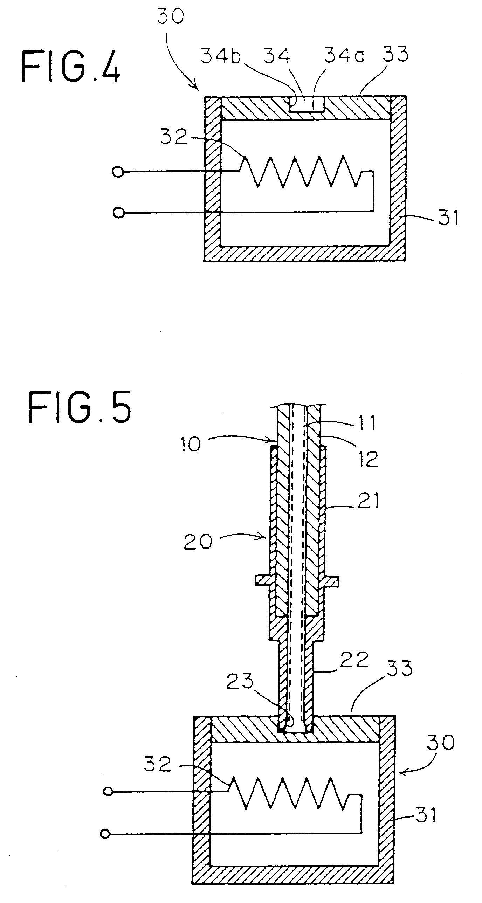

Fig. 4 shows a schematic sectional view of a terminal treatment device used for the process shown in Figs. 1 to 3b ;
Fig. 5 shows the operation of the terminal treatment process performed by the terminal treatment device of Fig. 4 ;

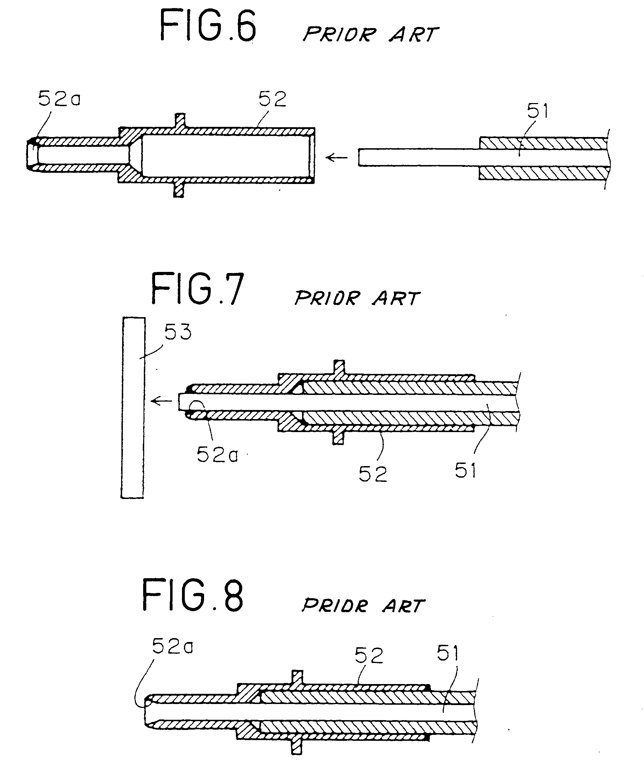

Fig. 6 shows a first step of a known terminal treatment process ;
Fig. 7 shows a second step of the known process ;
Fig. 8 shows a third step of the known process ;
Fig. 9 shows a sectional view of the state of the fibre created by the known process ; and
Fig. 10 shows another sectional view of the state of the fibre created by the known process.

A terminal treatment preparation process, in which a plastic fibre 10 is initially fitted into an adapted ferrule 20, shall first be explained with reference to Figs. 1 to 3.

In a first step, the plastic fibre 10, which is comprised of a core portion 11a, a cladding portion 11b (commonly designated by reference numeral 11) and a coating 12, is cut as shown in Fig. 1.

In a second step, the coating 12 is peeled off as shown in Fig. 2. In a third step, shown in Fig. 3a, the exposed core-and-cladding part 11 of the plastic fibre is inserted into the ferrule 20 so that a predetermined length L of the core-and-cladding part 11 protrudes from the tip of the ferrule (Fig. 3b). As can be seen from Fig. 3a, the ferrule 20 comprises a first sleeve portion 21 of relatively large diameter for supporting the coating 12 of the plastic fibre, and a second sleeve portion 22 of relatively small diameter for supporting the exposed core-and-cladding part 11 of the fibre.

Upon completion of the above terminal treatment preparation steps, the plastic fibre is thermally processed so that the second sleeve portion 22 becomes filled with the core-and-cladding part 11 of the plastic fibre 20.

To this end, there is defined at the end of the second sleeve portion 22 a melt zone 23 having a length D. The internal surface of the sleeve at the melt zone 23 forms a taper expanding towards the tip of the sleeve. The length L of the core-and-cladding part 11 protruding from the tip of the ferrule is determined as a function of the diameter of the core-and-cladding part 11 and the volume of the melt zone 23.

Next, there shall be described with reference to Fig. 4 a device for carrying a heat treatment on the end part of the fibre 10 fitted in the ferrule 20.

Fig. 4 shows a device 30 according to the invention for carrying out the heat treatment. The device 30 comprises a chamber 31 provided with a heater 32 and a heating plate 33 formed thereupon, the heating plate being made of a heat-conductive material such as a metal. The heating plate 33 comprises further a blind hole 34 located at the center part thereof. The blind hole 34 is made sufficiently deep to receive the end portion of the ferrule 20 which corresponds to the melt zone of length D. The blind hole has a base 34a finished in a smooth mirror-face fashion so as to serve as an abutting face for the tip of the core-and-cladding part 11 of the plastic fibre 10 and further has a sidewall 34b which comes into contact with the outer sidewall of the end portion of the ferrule 20. The heating plate 33 can be constructed from a first plate provided with a through hole and a second plate applied against the first so as to transform the through hole into the blind bore.

As shown in Fig. 5, the end portion of the ferrule 20 containing a protruding core-and-cladding part 11 is inserted into the blind hole 34 and pressed. Accordingly the plastic fibre 10 is heated not only at the tip face of the core-and-cladding part 11, but also by the sidewall of the ferrule 20, so that the portion of core-and-cladding part 11 at the melt zone 23 fuses uniformly. Consequently the melt zone 23 is filled completely without producing a void. At the same time, the mirror-face finish of the base 34a is imprinted on the end face of the core-and-cladding part 11 of the plastic fibre 10, thereby importing a high degree of smoothness to the end face.

According to the present invention, the terminal treatment method is such that even when the length D of the melt zone becomes large, optimum terminal treatments can nevertheless be effected in which the melt zone is completely filled with the melted fibre without generating a void therein. Consequently, a crack will not be formed by cold and hot shock testing on fibre within its ferrule.

## Claims

1. Terminal treatment process of a plastic fibre (10) comprised of at least a core-and-cladding part (11) and a coating (12), said process comprising the steps of :
- exposing an end portion of the core-and-cladding part over a predetermined length by stripping the coating ;
- passing the plastic fibre terminal through a ferrule (20), so that an end face of the core-and-cladding part protrudes therefrom at a predetermined length, said ferrule being so configured as to hold the coating and the core-and-cladding part ;
- applying said end face to a heating means (33), so that said end portion fuses to form a melt zone (23), whereby said fibre is rendered non-retractable from the ferrule,
characterized in that when the end face of the core-and-cladding part is applied to the heating means, the sidewall of the ferrule end portion is simultaneously heated by said heating means (33).

2. Terminal treatment process according to claim 1, wherein the sidewall of the ferrule end portion is heated by inserting it into a blind hole (34) provided in a heating means (33), the end face of the protruding core-and-cladding part being applied to a base (34a) of the blind hole.

3. Terminal treatment process according to claim 1 or 2, wherein the base (34a) of the blind hole (34) is finished in a mirror-face fashion.

4. Terminal treatment process according to anyone of claims 1 to 3, wherein the end portion of the ferrule (20) is provided with an internal recess whereby the melt zone of the core-and-cladding part is tied to said ferrule.

5. Terminal treatment process according to claim 4, wherein said internal recess of the ferrule (20) comprises an internal tapered end portion thereof.

6. A device (30) for treating a plastic fibre terminal after being passed through a ferrule as defined in claim 1, said device comprising a heating means (33) and a means for heating said heating means,
characterized in that said heating means is provided with a blind hole (34) having a base (34a) and a sidewall (34b), said blind hole (34) being suitable for receiving said plastic fibre terminal such that the end face of the core-and-cladding part (11) is applied to the base (34a) of the blind hole (34) and such that the sidewall of the ferrule comes into contact with the sidewall (34b) of the blind hole (34).

7. A device (30) according to claim 6, wherein the heating means (33) is made of a metal.

8. A device (30) according to claim 6 or 7, wherein the base (34a) of the blind hole (34) is finished in a mirror-face fashion.

9. A device (30) according to anyone of claims 6 to 8, wherein said heating means (33) comprises a first plate provided with a through hole and a second plate applied against said first plate, whereby said through hole is transformed into said blind hole (34).

10. A device (30) according to anyone of claims 6 to 9, characterized in that said means for heating comprises a chamber (31) closed by said heating means (33) and a heater (32) disposed within said chamber (31).
